# EUROPEAN PATENT SPECIFICATION

(11) **EP 1 877 487 B1**
(45) Date of publication and mention of the grant of the patent: **09.01.2013**
(21) Application number: 06751596.5
(22) Date of filing: 25.04.2006
(51) Int. Cl.: C08J 9/04, C08J 9/00, C08K 5/101, C08K 5/12, C08K 5/103, C08G 63/16, C08G 63/181, C08K 5/00

(54) **PLASTICIZER COMPOSITIONS FOR FLEXIBLE CLOSED CELL FOAMS**
WEICHMACHERZUSAMMENSETZUNGEN FÜR GESCHLOSSENZELLIGE WEICHSCHAUMSTOFFE
COMPOSITIONS PLASTIFIANTES POUR MOUSSES SOUPLES A ALVEOLES FERMEES

(30) Priority: 25.04.2005 US 113501
(43) Date of publication of application: 16.01.2008
(73) Proprietor: Eastman Specialties Holdings Corporation, New Castle County (US)
(72) Inventor: ARENDT, William, D., Libertyville, Illinois 60048 (US); JOSHI, Makarand, V., Grayslake, Illinois 60030 (US); MCCONNELL, Wesley, W., Johnson City, Tennessee 37601 (US); RAUSCH, Kimberly, A., Des Plaines, Illinois 60018 (US); STREETER, Bruce, E., Crystal Lake, Illinois 60014 (US); STREPKA, Arron, M., LaGrange Park, Illinois 60526 (US)
(74) Representative: Ricker, Mathias
(86) International application number: PCT/US2006/015954
(87) International publication number: WO 2006/116568

(56) References cited:
- US-A- 3 301 709
- US-A- 3 331 802
- US-A1- 2003 114 564
- US-B2- 6 583 207
- US-E- R E29 487

## Description

This invention relates to plasticized foamable polymer compositions. More particularly, this invention relates to foamable compositions comprising a rigid organic polymer such as polyvinyl chloride and a novel plasticizer comprising a blend of 1) an oligomeric ester derived from phthalic acid and/or an aliphatic dicarboxylic acid and 2) an ester of benzoic acid. The compositions are particularly useful for preparing flexible, closed cell foams.

### BACKGROUND

U. S. Reissued Patent No. RE 29,487, which issued to Ross Gardner Jr. on December 6, 1977 describes foamable articles formed from plastisols of rigid organic polymers such as polyvinyl chloride (PVC). One class of plasticiz10er disclosed in this patent are oligomeric polyesters prepared from 1) phthalic acid or a suitable derivative thereof such as phthalic anhydride and 2) a dihydric alcohol or a gylcol such as diethylene or dipropylene glycol.

RE 29,487 (12/6/77) Gardner, Jr. further describes foamable articles composed of polymeric foamable materials. The foamable articles are composed of a foamed plasticized polymeric material with a sufficiently high concentration of plasticizer to provide a foamable article with a reduced rate of recovery from compression. Gardner discloses PVC homopolymer and copolymers with at least 85 percent of vinyl chloride and 15 percent of other monomers (col. 3, lines 14-29). Further, this reference discusses the pressure and recovery rate of foamed materials. The examples describe plastisols containing PVC and Admex® 523, a phthlate oligomer, with other plasticizers (no benzoates). This reference further discusses a foamed article of the above composition to achieve a rate of recovery from 60 percent compression to 40 percent compression in about 1 to 60 seconds and an equilibrium compression of from 0.2 to 1.3 psi. RE '487 does not disclose a plasticized foamable polymer composition comprising PVC and a novel plasticizer as in this invention. Also, this art does not describe the reduction or elimination of phthalate ester monomers as plasticizers for flexible closed cell foams.

Oligomeric polyesters suitable for preparing flexible closed cell PVC foams of this type typically exhibit a weight average molecular weight of from 500 to about 1500 grams per mole. It has now been discovered that the presence in substantial amounts of monomeric esters of phthalic acid produced as a by-product during preparation of these polyesters is required for the desired foam structure of uniformly small closed cells and a void-free surface. Unfortunately, various regulatory agencies have limited the maximum concentration of these monomeric esters for certain end uses, including as plasticizers, to below the levels required for the preparation of acceptable foams.

U.S. 3,301,798 (1/31/67) Waterman et al. describes a process for producing an open cell PVC foam from PVC plastisols containing a blend of an alkali metal soap and an amine soap in water. The critical blend of amine soap, alkali metal soap, and water must be present in the PVC plastisol prior to frothing or beating to form the foam to provide a foam product having increased tensile strength or a tensile-density index with controllable cell size. The aqueous soap blend (about 2-16 parts by weight per 100 parts of PVC resin) is mixed with the plastisol or the plasticizer (forms an emulsion or dispersion) to achieve the foam improvements. The liquid plasticizers described include phthalate containing monomers in combination with other benzoate esters. The aqueous soap blend is also referred to as a liquid frothing aid or foam former in combination PVC, plasticizers and other additives. U.S. '798 does not disclose a plasticized foamable polymer composition comprising PVC and a novel plasticizer as in this invention. This art does not describe the reduction or elimination of phthalate ester monomers as plasticizers for flexible closed cell foams.

Velsicol Technical Bulletin (Benzoflex^{®} 2088) describes benzoate plasticizers as replacements for monomeric phthalate plasticizers. These plasticizers are described for use in adhesives, caulks, flooring, and as high solvating plasticizers for PVC applications. Velsicol Technical Bulletin (Benzoflex^{®} 2088) does not disclose a plasticized foamable polymer composition comprising PVC and a novel plasticizer as disclosed in this invention.

The novel plasticizer blend consists of an 1) oligomeric ester of phthalic acid and/or an aliphatic dicarboxylic acid, and a 2) monomeric ester of benzoic acid and/or an alkyl-substituted benzoic acid. The hydroxyl number of the blend is less than 30 mg KOH/gram of sample.

The present invention is based on the discovery that the monomeric esters produced during preparation of an oligomeric polyester can be replaced with esters of 1) benzoic acid or a substituted benzoic acid and 2) at least one diol, glycol, oligomeric glycol or polyhydric alcohol containing at least two carbon atoms without adversely affecting the cellular structure of foams prepared using the oligomeric phthalate as a plasticizer. It has also been found that the phthalic acid used to prepare the oligomer can be replaced in whole or in part with an aliphatic dicarboxylic acid.

In addition to replacing the undesirable monomeric phthalic esters in the oligomeric phthalate plasticizer, the benzoic acid esters unexpectedly provide a more uniform cell structure in the final foam and improve the efficiency of the plasticizer as a viscosity reducer for the polymer composition. This higher efficiency reduces the total concentration of plasticizer required in the foamable composition.

The oligomeric ester and the benzoic acid ester are both preferably liquids at 25°C.

### SUMMARY

This invention provides a plasticizer for foamable thermoplastic polymer compositions, said plasticizer comprising:
I. a polyester comprising repeating units exhibiting at least one formula selected from the group consisting of -(O)CC₆H₄C(O)OR¹O- and -(O)CR²C(O)OR¹O-, and terminal units exhibiting a formula selected from the group consisting of -OR³ and -(O)CR⁴, wherein the weight average molecular weight of said polyester is at least 500 grams per mole; R¹ is selected from the group consisting of alkylene and oxoalkylene radicals and contains from 2 to 10 carbon atoms; R² is selected from the group consisting of a single bond and alkylene radicals containing from 1 to 12 carbon atoms; R³ represents an alkyl radical containing from 1 to 24 carbon atoms; and R⁴ is at least one member selected from the group consisting of the hydrogen atom and alkyl radicals containing from 1 to 30 carbon atoms; and
II. an effective amount of at least one ester derived from a) at least one acid selected from the group consisting of benzoic acid and substituted benzoic acids, and b) at least one alcohol selected from the group consisting of mono- and polyhydric alcohols, wherein said alcohol contains from 1 to12 carbon atoms; wherein said at least one ester constitutes from 15 to 70 weight% of the plasticizer composition.

The hydroxyl number of said composition is preferably no greater than 30.

This invention also provides plastisols comprising a rigid thermoplastic organic polymer such as polyvinyl chloride and a quantity of one of the present plasticizer compositions sufficient for the resultant plastisols to form closed-cell flexible foams in the presence of a suitable blowing agent.

### DETAILED DESCRIPTION

The required and optional ingredients of the present foamable compositions are described in detail below.

### A. The Plasticizer

### The Oligomeric Polyester

One of the two required ingredients of the present plasticizer compositions is an oligomeric polyester prepared by reacting 1) phthalic acid, at least one aliphatic dicarboxylic acid/or a mixture of phthalic acid and said aliphatic dicarboxylic acid(s) with 2) at least one dihydric alcohol or oxoalcohol.

Derivatives of phthalic acid and/or the aliphatic dicarboxylic acid can be used in place of the respective acids. Suitable derivatives include the anhydride, halide and mono- or diesters prepared from monohydric alcohols.

Aliphatic dicarboxylic acids that can be used alone or in combination with phthalic acid to prepare the oligomeric polyester portion of the present plasticizers contain from 2 to 14 or more carbon atoms, preferably from 4 to 12 carbon atoms. Particularly preferred aliphatic dicarboxylic acids include but are not limited to adipic and 1,4-butanedioic acids.

Difunctional alcohols useful for preparing the oligomeric polyester contain from 2 to 10 or more carbon atoms. Partially etherified glycols such as di- and triethylene glycols and dipropylene glycol are also useful.

The oligomeric polyester is flowable at 25°C, and exhibits a weight average molecular weight of at least 500 grams per mole and preferably less than about 22,000 grams per mole.

The terminal units of the oligomeric polyester are derived from a monohydric alcohol or a monocarboxylic acid. Suitable alcohols are represented by the general formula R³OH and suitable monocarboxylic acids by the general formula R⁴C(O)OH. In these general formulae R³ represents an alkyl radical containing from 1 to 24, preferably from 6 to 12, carbon atoms and R⁴ represents a hydrogen atom or an alkyl radical containing from 1 to 30, preferably from 2 to 18, carbon atoms. Terminal units derived from monohydric alcohols are preferred. The polyester should be flowable and self-leveling at 25°C.

The monohydric alcohol(s) or carboxylic acid(s) are typically included in the initial reaction mixture used to prepare the polyester.

### The Benzoic Acid Ester

The present plasticizer compositions also contain a total of at least 15 weight percent of at least one ester derived from 1) benzoic acid, an alkyl-substituted benzoic acid or a combination of said benzoic acid and an alkylcarboxylic acid, and 2) at least one mono- or polyhydric alcohol. Suitable alkyl substituents on the benzoic acid typically contain from 1 to about 6 carbon atoms.

Monohydric alcohols that can be used to prepare the benzoic acid ester typically contain from 1 to 12 carbon atoms. Suitable dihydric alcohols and glycols contain at least two carbon atoms and include but are not limited to ethylene glycol, di- and triethylene glycols, propylene glycol, dipropylene glycol and diols such as 1,4-butanediol and neopentyl glycol. Glycerol is an example of a trifunctional alcohol.

When polyhydric alcohols are used, the molar ratio of reactants and the reaction conditions used to prepare the benzoic acid ester should preferably be controlled to limit the concentration of free hydroxyl groups in the combination of the benzoic acid ester and oligomeric ester to a hydroxyl number of no more than 30. Procedures for determining the hydroxyl number of chemical compositions are known. One procedure is described in ASTM Test Method E 222-00.

The benzoic acid ester constitutes from 15 to about 70 weight percent, preferably from 30 to 60 weight percent, of a plasticizer composition of the present invention.

### B. The Foamable Polymer

Any rigid organic polymer capable of forming a liquid plastisol and homogeneous foam in combination with the plasticizer compositions of this invention can be used to prepare foamable compositions. Homopolymers and copolymers of vinyl halides, particularly vinyl chloride, are preferred. Suitable copolymers typically contain up to 15 weight percent of repeating units derived from at least one ethylenically unsaturated compound selected from hydrocarbons, halohydrocarbons other than vinyl chloride, carboxylic acids and alcohol and esters of these ethylenically unsaturated acids and alcohols. Preferred comonomers include but are not limited to styrene, halogen-containing styrenes, vinyl acetate, and the alkyl esters of acrylic, methacrylic, maleic and crotonic acids.

The main requirement for rigid polymers that form liquid plastisols suitable for use in the present compositions is average particle size, which is typically between 1 and 5 microns, a type referred to as dispersion grade. This and other requirements for plastisol forming polymers are described in numerous publications, including The Handbook of PVC Formulating by Edward Wickson (John Wiley, 1993)

### C. The Blowing Agent

The present compositions contain a compound, referred to as a precursor, that decomposes upon heating to yield a gas, typically nitrogen, that is responsible for foaming of the composition. To form an acceptable foam, gas generation must be coordinated with fusing of the plastisol particles to form a unitary solid structure. A preferred blowing agent precursor is azodicarbonamide.

### D. Additional Ingredients

In addition to at least one of the plastisol-forming polymers described in the preceding section of this specification, namely a two-component plasticizer of the present invention, and a blowing agent precursor, the foamable plastisols of this invention can contain one or more of the following ingredients:

additional plasticizers including but not limited to those disclosed in U.S. Reissue Patent No. RE 29,487;

heat stabilizers for the foamable polymer;

A total no greater than 60 weight percent, based on the total weight of foamable polymer described in the preceding section B of this specification and of at least one additional polymer capable of modifying the plasticizer absorption and the viscosity of the composition, an example of this type of polymer being suspension grade polyvinyl chloride;

up to about 60 to 70 %, based on the foamable polymer, of inert solid fillers such as calcium carbonate; and

a transition metal compound as an activator for the blowing agent and a surfactant as a foam cell stabilizer.

### E. Preparation of Elastomeric Foam

Foams can be prepared from the plastisol compositions of the present invention containing a heat-decomposable foaming agent by 1) forming a layer of the plastisol on a suitable substrate, 2) heating the plastisol sufficiently to gel the plastisol, then generating the blowing agent from the precursor and finally fusing the cellular plastisol to form an elastomeric foam.

In this aspect, elastomeric foams are prepared by blending from about 0.05 to about 10.0 weight percent blowing agent precursor with the plastisoL The blend is then heated to a temperature effective for fusing the plastisol and generating a blowing agent from the precursor. In one aspect, the plastisol blowing agent precursor blend is heated rapidly to a temperature of at least about 170°C and not more than about 220°C in about 1 to about 5 minutes.

Alternatively, the plastisol blowing agent precursor blend may be heated more slowly to a temperature effective for gelling the foam and then to a temperature effective for generating a blowing agent from the precursor and fusing the plastisol. In this aspect, the plastisol blowing agent precursor blend may be heated first to a temperature of about 100°C to about 150°C for about 1 to about 3 minutes. The blend is then heated to a temperature of at least about 180°C, and not more than about 220°C for about 1 to about 4 minutes.

The following non-limiting examples describe preferred foamable compositions of the present invention. All parts and percentages in the examples are by weight unless otherwise indicated.

### EXAMPLE 1

This example demonstrates the quality of foams prepared using an oligomeric adipic acid copolymer with four different levels of dipropylene glycol dibenzoate.

An oligomeric polyester of the present invention was prepared by heating to 230°C a mixture prepared using adipic acid, a 1.06:1 weight ratio mixture of 1,4-butane diol and propylene glycol as the diols and 2-ethylhexyl alcohol as the end-capping reactant. The water generated as a by-product of the reaction was continuously removed and heating was continued until the acid number of the reaction mixture was 3 mg KOH/gram of sample.

The weight average molecular weight of the resultant oligomer was 3,040 g. per mole.

An oligomer prepared using phthalic acid, a 1:1.3 weight ratio mixture of 1,4-butanediol and propylene glycol as the diols and isooctyl alcohol as the end-capping reactant was prepared in a similar manner and evaluated for comparative purposes. This oligomer contained 30 weight percent of monomeric phthalic acid esters.

The oligomer identified as 2 in the following Table 1 was blended with dipropylene glycol dibenzoate to form plasticizers. The amounts of dibenzoate and the quality of the resultant foam are summarized in Table 2.

The foamable composition used to evaluate the plasticizers was prepared by blending to homogeneity the following ingredients:
51 parts of a dispersion grade of polyvinyl chloride, available as Geon 124A from Polyone;
49 parts of a suspension grade of polyvinyl chloride, available as Geon 217 from Polyone;
100 parts of one of the foregoing plasticizers;
21.4 parts of calcium carbonate;
6.2 parts of azodicarbonamide as the blowing agent;
1.2 parts of Akrostab7 ABC-1, available from Akzo Nobel as a thermal stabilizer and blowing agent activator; and
2.0 parts of VS 103, available from Air Products as a cell stabilizer

Foams were prepared by casting a 40 mil (1 mm) thick film of each composition onto release paper. The films were gelled by heating them at 120°C for two minutes, following which they were heated at 205°C to foam and fuse the composition.

The size and uniformity of the cells in the resultant foams were evaluated The results of this evaluation are recorded in Table 2. Foams exhibiting an average cell size less than 1 mm, a variation in individual cell sizes of less than 10 percent and no "cratering" on the surfaces of the foam were rated "good". Others were subjectively rated as "fair" or "poor", depending upon their deviation from this standard.

The types and amounts of reactants used to prepare the two oligomers evaluated are listed in Table 1.

**TABLE 1**

| Oligomer Composition | | | | | | |
|---|---|---|---|---|---|---|
| No. | Phthalic Acid (%) | Adipic Acid (%) | Diol | End Capping Reactant | Monomeric Phthlate | MW_{w} |
| 1^{a} | 100 | 0 | BD, PG | IOA | 30% | 900 |
| 2 | 0 | 100 | BD, PG | EH | 0% | 3040 |

| | | | | | | |
|---|---|---|---|---|---|---|
| BD=1,4-butanediol PG= propylene glycol IOA=isoctyl alcohol EH = 2-ethyl-1-hexanol a = evaluated for comparative purposes | | | | | | |

Oligomer 1 in the plasticizer identified as A in Table 2 contains 30% monomeric phthalate ester and was evaluated for comparative purposes. This phthalate ester concentration is above the limit established by some regulatory agencies.
Oligomer 2 is an oligomer of the present invention. For comparative purposes this oligomer was evaluated without any benzoate in Plasticizer B.

**TABLE 2**

| | Plasticizer Composition and Foam Evaluation Results | | | | |
|---|---|---|---|---|---|
| | Oligomer | | Benzoate | | Foam Quality |
| | No. | % | Type | % | |
| A¹ | 1 | 100 | None | 0 | Good |
| B² | 2 | 100 | None | 0 | Poor |
| C³ | 2 | 90 | DPGDB | 10 | Poor |
| D | 2 | 70 | DPGDB | 30 | Fair |
| E | 2 | 50 | DPGDB | 50 | Good |
| F | 2 | 30 | DPGDB | 70 | Good |

| | | | | | |
|---|---|---|---|---|---|
| DPGDB = Dipropylene Glycol Dibenzoate 1 = Evaluated for comparative purposes. Contained 30 % monomeric phthalate ester 2 = Evaluated for comparative purposes. Contained no benzoate esters or monomeric phthalate esters. 3 = Composition Example | | | | | |

The benzoic acid ester was used at concentrations of 10, 30, 50 and 70 percent by weight, based on total plasticizer.

Plasticizer C contained 10 percent of the benzoate ester, which is below the limit for the present compositions. The foam prepared using this plasticizer exhibited excessive variation in cell size, contained voids throughout the foam, and was therefore considered unacceptable.

The average cell size in the foam prepared using plasticizer D containing 30 percent benzoate ester was larger than the cell size produced using plasticizer E containing 50 percent benzoate ester. The foam quality was rated "fair", but was still considered acceptable.

## Claims

1. A plasticizer for foamable thermoplastic polymer compositions, said plasticizer composition comprising:
a polyester comprising repeating units exhibiting at least one formula selected from the group consisting of -(O)CC₆H₄C(O)OR¹O- and -(O)CR²C(O)OR¹O-, and terminal units exhibiting a formula selected from the group consisting of -OR³ and - (O)CR⁴, wherein the weight average molecular weight of said polyester is at least 500 grams per mole; and wherein R¹ is selected from the group consisting of alkylene and oxoalkylene radicals and contains from 2 to 10 carbon atoms; R² is selected from the group consisting of a single bond and alkylene radicals containing from 1 to 12 carbon atoms; R³ represents an alkyl radical containing from 1 to 24 carbon atoms, and R⁴ is at least one member selected from the group consisting of the hydrogen atom and alkyl radicals containing from 1 to 30 carbon atoms; and
an effective amount of at least one ester derived from a) at least one acid selected from the group consisting of benzoic acid and alkyl-substituted benzoic acids, wherein said alkyl substituent contains from 1 to 6 carbon atoms, and b) at least one alcohol selected from the group consisting of mono- and polyhydric alcohols, and wherein said alcohol contains from 1 to 12 carbon atoms; wherein said at least one ester constitutes from 15 to 70 weight % of the plasticizer composition.

2. The plasticizer for foamable thermoplastic polymer compositions according to claim 1, wherein the hydroxyl number is no greater than 30 mg KOH/gram of sample.

3. The plasticizer composition according to claim 1 wherein
the weight average molecular weight of said polyester is from 500 to 22,000 grams per mole;
R² contains from 2 to 10 carbon atoms;
R³ contains from 6 to 12 carbon atoms;
R⁴ contains from 2 to 18 carbon atoms; and
said ester is a benzoic acid ester.

4. The plasticizer composition according to claim 3 wherein the hydroxyl number of said composition is less than 30mg KOH/gram of sample.

5. The plasticizer composition according to claim 4 wherein the concentration of said ester is from 30 to 60 percent, based on the total weight of said plasticizer.

6. The plasticizer composition according to claim 1 wherein said terminal units are - OR³.

7. The plasticizer for foamable thermoplastic polymer compositions according to claim 1, wherein the polyesters are liquid at 25 °C.

8. A foamable plastisol comprising a dispersion of finely divided rigid thermoplastic organic polymer and an effective amount of a plasticizer as defined in claim 1 for said polymer, wherein said plasticizer comprises:
a liquid polyester comprising repeating units exhibiting at least one formula selected from the group consisting of -(O)CC₆H₄C(O)OR¹O- and -(O)CR²C(O)OR¹O- , and terminal units exhibiting a formula selected from the group consisting of -OR³ and -(O)CR⁴ , wherein the weight average molecular weight of said polyester is at least 500 grams per mole; and wherein R¹ is selected from the group consisting of alkylene and oxoalkylene radicals and contains from 2 to 10 carbon atoms, R² is selected from the group consisting of a single bond and alkylene radicals containing from 1 to 12 carbon atoms; R³ represents an alkyl radical containing from 1 to 24 carbon atoms, and R⁴ is at least one member selected from the group consisting of the hydrogen atom and alkyl radicals containing from 1 to 30 carbon atoms; and
an effective amount of at least one ester derived from a) at least one acid selected from the group consisting of benzoic acid and alkyl-substituted benzoic acids, wherein said alkyl substituent contains from 1 to 6 carbon atoms, and b) at least one alcohol selected from the group consisting of mono- and polyhydric alcohols, wherein said alcohol contains from 1 to 12 carbon atoms.

9. The plastisol according to claim 8 wherein
the weight average molecular weight of said polyester is from 500 to 22,000 grams per mole;
R² contains from 2 to 10 carbon atoms;
R³ contains from 6 to 12 carbon atoms;
R⁴ contains from 2 to 18 carbon atoms; and
said ester is a benzoic acid ester.

10. The plastisol according to claim 9 wherein the hydroxyl number of said composition is less than 30.

11. The plastisol according to claim 10 wherein the concentration of said ester is from 30 to 60 weight percent, based on the total weight of said plasticizer.

12. The plastisol according to claim 8 wherein said terminal units are -OR³.

13. The plastisol according to claim 8 wherein said rigid thermoplastic organic polymer is polyvinyl chloride.

14. The foamable plastisol according to claim 8, wherein the composition further comprises a blowing agent precursor.

15. The plastisol according to claim 13, wherein no greater than 60 weight percent of the polymer comprises an additional polymer effective for modifying the plasticizer absorption and viscosity of the foamable thermoplastic polymer composition.

16. The plastisol according to claim 15, wherein the polymer is polyvinyl chloride.

17. The plastisol according to claim 12, wherein the composition further comprises a heat stabilizer, an inert filler, a blowing agent activator, and a surfactant.

18. An elastomeric foam prepared from a plastisol as defined in claim 8 by a process comprising:
forming a plastisol blowing agent precursor blend;
heating the plastisol blowing agent precursor blend to a temperature effective for gelling the plastisol generating a blowing agent from the blowing agent precursor; and
fusing the plastisol.

19. The elastomeric foam according to claim 18, wherein the plastisol blowing agent precursor blend is heated to a temperature of no less than 170 °C and no greater than 220 °C for 1 to 5 minutes.

20. The elastomeric foam according to claim 18, wherein the plastisol blowing agent precursor blend is heated to a temperature of 100 °C to 150 °C for 1 to 3 minutes, and then to a temperature no less than 180 °C and no greater than 220 °C for 1 to 4 minutes.

21. The elastomeric foam according to claim 18, wherein the foam has an average cell size within +/- 10 percent.

22. A method of preparing an elastomeric foam from a plastisol as defined in claim 8 comprising:
forming a plastisol blowing agent precursor blend;
heating the plastisol blowing agent precursor blend to a temperature effective for fusing the plastisol; and
generating a blowing agent from the blowing agent precursor.

23. The method according to claim 22, wherein the plastisol blowing agent precursor blend is heated to a temperature of at least 170 °C and no greater than 220 °C for 1 to 5 minutes.

24. The method according to claim 22, wherein the plastisol blowing agent precursor blend is heated to a temperature of 100 °C to 105 °C for 1 to 3 minutes and then to a temperature of at least 180 °C, and no greater than 220 °C for 1 to 4 minutes.

25. The method according to claim 22, wherein the foam has an average cell size within +/- 10 percent.

## Patentansprüche

1. Plastifiziermittel für schäumbare thermoplastische Polymerzusammensetzungen, wobei die Plastifiziermittelzusammensetzung umfasst:
Einen Polyester, welcher sich wiederholende Einheiten umfasst, welche mindestens eine Formel aufweisen ausgewählt aus der Gruppe bestehend aus - (O)CC₆H₄C(O)OR¹O- und -(O)CR²C(O)OR¹O-, und terminale Einheiten, welche eine Formel aufweisen ausgewählt aus der Gruppe bestehend aus -OR³ und - (O)CR⁴, wobei das Gewichtsmittel des Molekulargewichts des besagten Polyesters mindestens 500 Gramm pro Mol beträgt; und wobei R¹ ausgewählt ist aus der Gruppe bestehend aus Alkylen- und Oxyalkylenresten und 2 bis 10 Kohlenstoffatome enthält; R² ausgewählt ist aus der Gruppe bestehend aus einer Einfachbindung und Alkylenresten, welche 1 bis 12 Kohlenstoffatome enthalten; R³ einen Alkylrest darstellt, welcher 1 bis 24 Kohlenstoffatome enthält, und R⁴ mindestens ein Element ist ausgewählt aus der Gruppe bestehend aus dem Wasserstoffatom und Alkylresten, welche 1 bis 30 Kohlenstoffatome enthalten; und
einer wirksamen Menge mindestens eines Esters abgeleitet von a) mindestens einer Säure ausgewählt aus der Gruppe bestehend aus Benzoesäure und Alkylsubstituierten Benzoesäuren, wobei besagter Alkylsubstituent 1 bis 6 Kohlenstoffatome enthält, und b) mindestens einem Alkohol ausgewählt aus der Gruppe bestehend aus ein- und mehrwertigen Alkoholen, und wobei besagter Alkohol 1 bis 12 Kohlenstoffatome enthält; wobei besagter mindestens eine Ester 15 bis 70 Gewichts-% der Plastifiziermittelzusammensetzung ausmacht.

2. Plastifiziermittel für schäumbare thermoplastische Polymerzusammensetzungen nach Anspruch 1, wobei die Hydroxylzahl nicht größer als 30 mg KOH/Gramm der Probe ist.

3. Plastifiziermittelzusammensetzung nach Anspruch 1, wobei
das Gewichtsmittel des Molekulargewichts des besagten Polyesters 500 bis 22.000 Gramm pro Mol beträgt;
R² 2 bis 10 Kohlenstoffatome enthält;
R³ 6 bis 12 Kohlenstoffatome enthält;
R⁴ 2 bis 18 Kohlenstoffatome enthält; und
wobei besagter Ester ein Benzoesäureester ist.

4. Plastifiziermittelzusammensetzung nach Anspruch 3, wobei die Hydroxylzahl der besagten Zusammensetzung weniger als 30 mg KOH/Gramm der Probe beträgt.

5. Plastifiziermittelzusammensetzung nach Anspruch 4, wobei die Konzentration des besagten Esters 30 bis 60 Prozent beträgt bezogen auf das Gesamtgewicht des besagten Plastifiziermittels.

6. Plastifiziermittelzusammensetzung nach Anspruch 1, wobei besagte terminale Einheiten -OR³ sind.

7. Plastifiziermittel für schäumbare thermoplastische Polymerzusammensetzungen nach Anspruch 1, wobei die Polyester bei 25 °C flüssig sind.

8. Schäumbares Plastisol umfassend eine Dispersion eines feinverteilten festen thermoplastischen organischen Polymeren und eine wirksame Menge eines Plastifiziermittels wie in Anspruch 1 definiert für besagtes Polymer, wobei besagtes Plastifiziermittel umfasst:
Einen flüssigen Polyester, welcher sich wiederholende Einheiten aufweist, welche mindestens eine Formel aufweisen ausgewählt aus der Gruppe bestehend aus - (O)CC₆H₄C(O)OR¹O- und -(O)CR²C(O)OR¹O-, und terminale Einheiten, welche eine Formel aufweisen ausgewählt aus der Gruppe bestehend aus -OR³ und - (O)CR⁴, wobei das Gewichtsmittel des Molekulargewichts des besagten Polyesters mindestens 500 Gramm pro Mol beträgt; und wobei R¹ ausgewählt ist aus der Gruppe bestehend aus Alkylen- und Oxyalkylenresten und 2 bis 10 Kohlenstoffatome enthält, R² ausgewählt ist aus der Gruppe bestehend aus einer Einfachbindung und Alkylenresten, welche 1 bis 12 Kohlenstoffatome enthalten; R³ einen Alkylrest darstellt, welcher 1 bis 24 Kohlenstoffatome enthält, und R⁴ mindestens ein Element ist ausgewählt aus der Gruppe bestehend aus dem Wasserstoffatom und Alkylresten, welche 1 bis 30 Kohlenstoffatome enthalten; und
einer wirksame Menge mindestens eines Esters abgeleitet von a) mindestens einer Säure ausgewählt aus der Gruppe bestehend aus Benzoesäure und Alkylsubstituierten Benzoesäuren, wobei besagter Alkylsubstituent 1 bis 6 Kohlenstoffatome enthält, und b) mindestens einem Alkohol ausgewählt aus der Gruppe bestehend aus ein- und mehrwertigen Alkoholen, wobei besagter Alkohol 1 bis 12 Kohlenstoffatome enthält.

9. Plastisol nach Anspruch 8, wobei
das Gewichtsmittel des Molekulargewichts des besagten Polyesters 500 bis 22.000 Gramm pro Mol beträgt;
R² 2 bis 10 Kohlenstoffatome enthält;
R³ 6 bis 12 Kohlenstoffatome enthält;
R⁴ 2 bis 18 Kohlenstoffatome enthält; und
wobei besagter Ester ein Benzoesäureester ist.

10. Plastisol nach Anspruch 9, wobei die Hydroxylzahl der besagten Zusammensetzung weniger als 30 beträgt.

11. Plastisol nach Anspruch 10, wobei die Konzentration des besagten Esters 30 bis 60 Gewichtsprozent beträgt bezogen auf das Gesamtgewicht des besagten Plastifiziermittels.

12. Plastisol nach Anspruch 8, wobei besagte terminale Einheiten -OR³ sind.

13. Plastisol nach Anspruch 8, wobei besagtes feste thermoplastische organische Polymer Polyvinylchlorid ist.

14. Schäumbares Plastisol nach Anspruch 8, wobei die Zusammensetzung weiter einen Vorläufer eines Treibmittels aufweist.

15. Plastisol nach Anspruch 13, wobei nicht mehr als 60 Gewichtsprozent des Polymeren ein zusätzliches Polymer umfassen, welches wirksam ist, die Plastifiziermittelaufnahme und Viskosität der schäumbaren thermoplastischen Polymerzusammensetzung zu modifizieren.

16. Plastisol nach Anspruch 15, wobei das Polymer Polyvinylchlorid ist.

17. Plastisol nach Anspruch 12, wobei die Zusammensetzung weiter einen Wärmestabilisator, einen inerten Füllstoff, einen Aktivator für ein Treibmittel, und ein oberflächenaktives Mittel umfasst.

18. Elastomerer Schaum hergestellt aus einem Plastisol wie in Anspruch 8 definiert durch ein Verfahren umfassend:
Bilden einer Vorläufermischung eines Treibmittels für das Plastisol;
Erwärmen der Vorläufermischung des Treibmittels für das Plastisol auf eine Temperatur, welche wirksam ist, das Plastisol zu gelieren und ein Treibmittel aus dem Vorläufer für das Treibmittel zu erzeugen; und
Schmelzen des Plastisols.

19. Elastomerer Schaum nach Anspruch 18, wobei die Vorläufermischung des Treibmittels für das Plastisol auf eine Temperatur von nicht weniger als 170 °C und nicht mehr als 220 °C für eine Zeitdauer von 1 bis 5 Minuten erhitzt wird.

20. Elastomerer Schaum nach Anspruch 18, wobei die Vorläufermischung des Treibmittels für das Plastisol auf eine Temperatur von 100 °C bis 150 °C für eine Zeitdauer von 1 bis 3 Minuten erhitzt wird und dann auf eine Temperatur von nicht weniger als 180 °C und nicht mehr als 220 °C für eine Zeitdauer von 1 bis 4 Minuten.

21. Elastomerer Schaum nach Anspruch 18, wobei der Schaum eine durchschnittliche Zellgröße innerhalb +/- 10 Prozent aufweist.

22. Verfahren zur Herstellung eines elastomeren Schaums aus einem Plastisol wie in Anspruch 8 definiert, umfassend:
Bilden einer Vorläufermischung eines Treibmittels für das Plastisol;
Erhitzen der Vorläufermischung des Treibmittels für das Plastisol auf eine Temperatur, welche effektiv ist das Plastisol zu schmelzen; und
Erzeugen des Treibmittels aus dem Vorläufer des Treibmittel.

23. Verfahren nach Anspruch 22, wobei die Vorläufermischung des Treibmittels für das Plastisol auf eine Temperatur von mindestens 170 °C und nicht mehr als 220 °C für eine Zeitdauer von 1 bis 5 Minuten erhitzt wird.

24. Verfahren nach Anspruch 22, wobei die Vorläufermischung des Treibmittels für das Plastisol auf eine Temperatur von 100 °C bis 105 °C für eine Zeitdauer von 1 bis 3 Minuten erhitzt wird und dann auf eine Temperatur von mindestens 180 °C und nicht mehr als 220 °C für eine Zeitdauer von 1 bis 4 Minuten.

25. Verfahren nach Anspruch 22, wobei der Schaum eine durchschnittliche Zellgröße innerhalb +/- 10 Prozent aufweist.

## Revendications

1. Plastifiant pour des compositions polymères thermoplastiques expansibles, ladite composition de plastifiant comprenant :
un polyester comprenant des unités répétitives présentant au moins une formule choisie dans le groupe constitué de -(O)CC₆H₄C(O)OR¹O- et -(O)CR²C(O)OR¹O-, et des unités de terminaison présentant une formule choisie dans le groupe constitué de -OR³ et de -(O)CR⁴, dans lequel la masse moléculaire moyenne en masse dudit polyester est d'au moins 500 grammes par mole ; et dans lequel R¹ est choisi dans le groupe constitué de radicaux alkylène et oxoalkylène et contient de 2 à 10 atomes de carbone ; R² est choisi dans le groupe constitué d'une liaison simple et de radicaux alkylène contenant de 1 à 12 atomes de carbone ; R³ représente un radical alkyle contenant de 1 à 24 atomes de carbone, et R⁴ est au moins un élément choisi dans le groupe constitué de l'atome d'hydrogène et de radicaux alkyle contenant de 1 à 30 atomes de carbone ; et
une quantité efficace d'au moins un ester dérivé de a) au moins un acide choisi dans le groupe constitué de l'acide benzoïque et d'acides benzoïques alkyle-substitués, dans lequel ledit substituant alkyle contient de 1 à 6 atomes de carbone, et de b) au moins un alcool choisi dans le groupe constitué d'alcools mono- et polyatomiques, et dans lequel ledit alcool contient de 1 à 12 atomes de carbone ; dans lequel ledit au moins un ester constitue de 15 à 70 % en masse de la composition de plastifiant.

2. Plastifiant pour des compositions polymères thermoplastiques expansibles selon la revendication 1, dans lequel le nombre hydroxyle est d'au plus 30 mg de KOH/gramme d'échantillon.

3. Composition de plastifiant selon la revendication 1, dans laquelle
la masse moléculaire moyenne en masse dudit polyester est de 500 à 22 000 grammes par mole ;
R² contient de 2 à 10 atomes de carbone ;
R³ contient de 6 à 12 atomes de carbone ;
R⁴ contient de 2 à 18 atomes de carbone ; et
ledit ester est un ester d'acide benzoïque.

4. Composition de plastifiant selon la revendication 3, dans laquelle le nombre hydroxyle de ladite composition est inférieur à 30 mg de KOH/gramme d'échantillon.

5. Composition de plastifiant selon la revendication 4, dans laquelle la concentration dudit ester est de 30 à 60 pourcent, rapporté à la masse totale dudit plastifiant.

6. Composition de plastifiant selon la revendication 1, dans laquelle lesdites unités de terminaison sont -OR³.

7. Plastifiant pour des compositions polymères thermoplastiques expansibles selon la revendication 1, dans lequel les polyesters sont liquides à 25°C.

8. Plastisol expansible comprenant une dispersion de polymère organique thermoplastique rigide finement divisée et une quantité efficace d'un plastifiant comme défini dans la revendication 1 pour ledit polymère, dans lequel ledit plastifiant comprend :
un polyester liquide comprenant des unités répétitives présentant au moins une formule choisie dans le groupe constitué de -(O)CC₆H₄C(O)OR¹O- et -(O)CR²C(O)OR¹O-, et des unités de terminaison présentant une formule choisie dans le groupe constitué de - OR³ et de -(O)CR⁴, dans lequel la masse moléculaire moyenne en masse dudit polyester est d'au moins 500 grammes par mole ; et dans lequel R¹ est choisi dans le groupe constitué de radicaux alkylène et oxoalkylène et contient de 2 à 10 atomes de carbone, R² est choisi dans le groupe constitué d'une liaison simple et de radicaux alkylène contenant de 1 à 12 atomes de carbone ; R³ représente un radical alkyle contenant de 1 à 24 atomes de carbone, et R⁴ est au moins un élément choisi dans le groupe constitué de l'atome d'hydrogène et de radicaux alkyle contenant de 1 à 30 atomes de carbone ; et
une quantité efficace d'au moins un ester dérivé de a) au moins un acide choisi dans le groupe constitué de l'acide benzoïque et d'acides benzoïques alkyle-substitués, dans lequel ledit substituant alkyle contient de 1 à 6 atomes de carbone, et de b) au moins un alcool choisi dans le groupe constitué d'alcools mono- et polyatomiques, dans lequel ledit alcool contient de 1 à 12 atomes de carbone.

9. Plastisol selon la revendication 8, dans lequel
la masse moléculaire moyenne en masse dudit polyester est de 500 à 22 000 grammes par mole ;
R² contient de 2 à 10 atomes de carbone ;
R³ contient de 6 à 12 atomes de carbone ;
R⁴ contient de 2 à 18 atomes de carbone ; et
ledit ester est un ester d'acide benzoïque.

10. Plastisol selon la revendication 9, dans lequel le nombre hydroxyle de ladite composition est inférieur à 30.

11. Plastisol selon la revendication 10, dans lequel la concentration dudit ester est de 30 à 60 pourcent en masse, rapportée à la masse totale dudit plastifiant.

12. Plastisol selon la revendication 8, dans lequel lesdites unités de terminaison sont -OR³.

13. Plastisol selon la revendication 8, dans lequel ledit polymère organique thermoplastique rigide est le poly(chlorure de vinyle).

14. Plastisol expansible selon la revendication 8, dans lequel la composition comprend de plus un précurseur d'agent gonflant.

15. Plastisol selon la revendication 13, dans lequel pas plus de 60 pourcent en masse du polymère comprennent un polymère supplémentaire efficace pour modifier l'absorption du plastifiant et la viscosité de la composition polymère thermoplastique expansible.

16. Plastisol selon la revendication 15, dans lequel le polymère est le poly(chlorure de vinyle).

17. Plastisol selon la revendication 12, dans lequel la composition comprend de plus un stabilisant thermique, une charge inerte, un activateur d'agent gonflant, et un tensioactif.

18. Mousse élastomère préparée à partir d'un plastisol selon la revendication 8 par un procédé comprenant :
la formation d'un mélange de précurseur d'agent gonflant de plastisol ;
le chauffage du mélange de précurseur d'agent gonflant de plastisol à une température efficace pour gélifier le plastisol produisant un agent gonflant à partir du précurseur d'agent gonflant ;
et
la fusion du plastisol.

19. Mousse élastomère selon la revendication 18, dans laquelle le mélange de précurseur d'agent gonflant de plastisol est chauffé à une température d'au moins 170°C et d'au plus 220°C pendant de 1 à 5 minutes.

20. Mousse élastomère selon la revendication 18, dans laquelle le mélange de précurseur d'agent gonflant de plastisol est chauffé à une température de 100°C à 150°C pendant de 1 à 3 minutes, et ensuite à une température d'au moins 180°C et d'au plus 220°C pendant de 1 à 4 minutes.

21. Mousse élastomère selon la revendication 18, dans laquelle la mousse présente une taille moyenne d'alvéole dans les limites de +/- 10 pourcent.

22. Procédé de préparation d'une mousse élastomère à partir d'un plastisol selon la revendication 8 comprenant :
la formation d'un mélange de précurseur d'agent gonflant de plastisol ;
le chauffage du mélange de précurseur d'agent gonflant de plastisol à une température efficace pour faire fondre le plastisol ; et
la production d'un agent gonflant à partir du précurseur d'agent gonflant.

23. Procédé selon la revendication 22, dans lequel le mélange de précurseur d'agent gonflant de plastisol est chauffé à une température d'au moins 170°C et d'au plus 220°C pendant de 1 à 5 minutes.

24. Procédé selon la revendication 22, dans lequel le mélange de précurseur d'agent gonflant de plastisol est chauffé à une température de 100°C à 105°C pendant de 1 à 3 minutes et ensuite à une température d'au moins 180°C, et d'au plus 220°C pendant de 1 à 4 minutes.

25. Procédé selon la revendication 22, dans lequel la mousse présente une taille moyenne d'alvéole dans les limites de +/- 10 pourcent.
